# EUROPEAN PATENT SPECIFICATION

(11) **EP 4 692 422 B1**
(45) Date of publication and mention of the grant of the patent: **01.04.2026**
(21) Application number: 24192824.1
(22) Date of filing: 05.08.2024
(51) Int. Cl.: C25B 1/04, C25B 9/19, C25B 9/65, C25B 9/77, C25B 11/031, C25B 11/042, C25B 13/08

(54) **COMPLEX KNITTED STRUCTURES AS ELECTRODE FOR ELECTROLYSIS OF WATER**
KOMPLEXE STRICKSTRUKTUREN ALS ELEKTRODE FÜR DIE WASSERELEKTROLYSE
STRUCTURES TRICOTÉES COMPLEXES EN TANT QU'ÉLECTRODE POUR L'ÉLECTROLYSE DE L'EAU

(43) Date of publication of application: 11.02.2026
(73) Proprietor: Umicore AG & Co. KG, 63457 Hanau-Wolfgang (DE)
(72) Inventor: Wiser, Artur, 60486 Frankfurt (DE); Goerens, Christian, 60435 Frankfurt (DE); Koenigs, Dietmar, 63571 Gelnhausen (DE)

(56) References cited:
- JP-A- 2004 202 183
- US-A1- 2022 380 915
- US-A1- 2023 020 215

## Description

The present invention relates to an electrode for the electrolysis of, in particular, alkaline water solutions. The electrode comprises a 3D-knitted metal structure in the form of a net. The metal is predominantly made of nickel. The invention also relates to a corresponding electrolysis cell and its use for the electrolysis of alkaline aqueous solutions. The field of electrochemistry has made considerable progress over the years, particularly in the area of electrolysis. Electrolysis is a process in which electric current is used to drive a non-spontaneous chemical reaction. The chemical change occurs when the substance loses or gains an electron (oxidation or reduction). This process is widely used in various industries, including the production of chemicals, galvanization, and even water splitting.

One of the key components in the electrolysis process are the electrodes. The choice of electrode material can greatly influence the efficiency and effectiveness of the electrolysis process. Different metals and alloys are widely used as electrode materials. However, these materials are often associated with challenges such as corrosion, high overpotential, and poor conductivity, which can limit the overall performance of the electrolysis process.

In the context of water electrolysis, these challenges become even more apparent. Water electrolysis is a crucial process in the production of hydrogen, a clean and renewable energy source (https://de.wikipedia.org/w/index.php?title=\Wasserelektrolyse&oldid=237671836). However, the efficiency of water electrolysis is often impaired by the above-mentioned challenges associated with conventional electrode materials. An overview of water electrolysis has been given by Hassan et al. in Environmental Science and Pollution Research (2022) 29:86994-87018.

In the field of electrochemistry, there is a continuous search for new electrode materials that can improve the challenges regarding service life and efficiency of the electrolysis process, particularly with water splitting. Nickel and in particular nickel alloys play a strong role in the design of the cathode and anode material in water electrolysis, since nickel is the most active non-noble metal regarding water electrolysis. For example, for hydrogen evolution reaction (HER) and oxygen evolution reaction (OER), this property can result in low values of overpotentials.

Up to the moment, some Patents have been disclosed regarding the use of nickel as electrodes for the alkaline water electrolysis. EP4060081A1 discloses an electrode for the production of hydrogen from alkaline aqueous solutions. It is composed of a conductive substrate, a catalytic layer formed on the conductive substrate and at least one platinum group metal selected from the group consisting of Pt, Ir, Ru, Pd, and Rh. A hydrogen adsorption layer is located on the catalytic layer. The electrode may contain nickel.

EP3575442A1 proposes an electrolysis unit for the electrolysis of alkaline aqueous solutions. It is mentioned that the cathode may preferably contain nickel. The same applies to EP3604619A1, EP3388553A1 or EP35754444A1. The electrode composition for alkaline water electrolysis in EP3452638A1 consists of nickel foam.

The production of knitted precious metal nets and, in particular, knitted two-layer precious metal nets is known to the person skilled in the art from the production of nitric acid (EP3056267A1 or EP680787A1). Nickel nets for use in electrolysis are also known (US20230304170A1, US20220349075A1). However, it is not known how the latter were produced.

In CN111041680A and CN217677802U, among other things, two-layer, knitted nickel nets for hydrogen electrolysis are also disclosed. In CN212128312U, the nickel electrodes consist of a double-layer nickel wire net that is woven positively and negatively. The bumps on the side plane of the nickel wire net are electrode tips, and the electrode tips are closely arranged on the front and back of the double-layer nickel wire net. Preferably, the double-layer nickel wire net comprises a forward wire and a forward vertical wire perpendicular to the warp and weft knitting process, a backward wire and a backward vertical wire perpendicular to the warp and weft knitting process. The intersection of the forward wire and the forward vertical wire and the intersection of the backward wire and the backward vertical wire are the electrode tips.

US2023020215A1 discloses an innovative textile which acts as a versatile spacer in zero-gap electrolytic cells, helping to improve efficiency by minimizing the distance between critical components like electrodes. It features a unique combination of mechanical and electrical connection capabilities, allowing for better performance and stability in energy conversion processes. The method of integrating this textile into the cell design simplifies the assembly process while enhancing the overall functionality of the electrolytic system.

US2022380915A1 teaches an elastic mat which enhances the efficiency of alkaline water electrolysis cells, which are used to produce hydrogen fuel from water, by providing better support and conductivity. The innovative design incorporates a flexible metal mesh that can adapt to changes in pressure and movement, improving the durability and performance of the electrolysis process. By using specific wire sizes and arrangements, this technology optimizes the electrolysis reaction, potentially leading to more sustainable and cost-effective hydrogen production.

JP2004202183A discloses a conductive brush as a special tool made from a flexible beltlike material with fuzzy strands that can conduct electricity, making it useful for various electronic applications. The unique feature of this brush is that both the base and the fuzzy strands are made from the same type of plastic, which is bonded together using sound waves, ensuring durability and efficiency. By incorporating a conductive material into the plastic, this brush can effectively transfer electrical signals, opening up new possibilities for use in devices like touchscreens and sensors.

US8372255BB also discloses a current collector suitable for operation in a partially compressed state in an electrochemical diaphragm or membrane cell. This comprises at least one layer obtained by interweaving or weaving a plurality of first sets of metal wires with a plurality of individual metal wires or second sets of metal wires. In general, it is provided with parallel corrugations, wherein the corrugated layer has a further flat weave or a flattened tubular weave obtained by interweaving or weaving individual metal wires.

The object of the present invention is to provide an improved type of electrodes for electrolysis of alkaline aqueous solutions, which help to overcome the above-mentioned disadvantages even more, in order to be able to ensure an improved electrolysis process for the generation of hydrogen.

This object is achieved by providing an electrode according to the features of the present claim 1. Claims 2 - 8 relate to preferred embodiments of the electrode according to the invention. Claim 9 - 14 are directed to an electrolysis apparatus and claim 15 to a stack of electrolysis cells comprising the inventive electrodes. Claims 16 and 17 are directed to the use of the electrodes for the electrolysis of aqueous alkaline solutions.

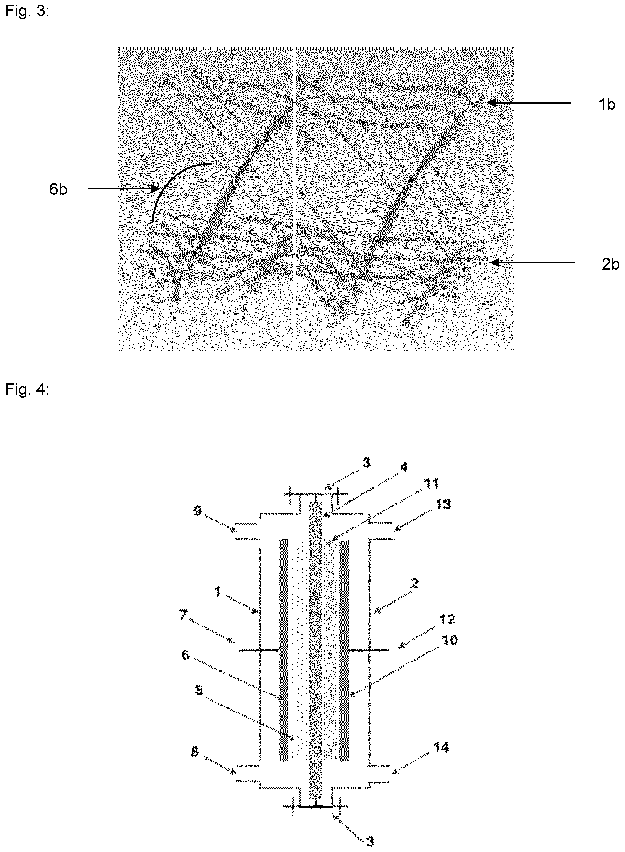

By providing an electrode for alkaline water electrolysis comprising a knitted metal wire net, wherein the metal wire to more than 50-wt% (predominantly) comprises nickel and the net is a three-dimensional net, and the net has pile threads protruding from the net plane, the object is surprisingly achieved. The nickel nets of the present invention can be used in an electrode for electrolysis of water. These 3D-knitted nickel nets prove to be more effective than the conventional structures of the prior art due to their more complex spatial structure. The pile threads stand out from the net plane. The angle of the pile threads with the net plane can be between 5 - 60 degrees, more preferably 10 - 50 degrees (see e.g. Fig. 3 for the angle between pile threads standing out of the net plane). In particular, this design offers superior electrolysis efficiency. The design is made to increase electrode/bipolar plate contact, resulting in increased conductivity. Even, due to the branched spatial structure, they form an ideal environment for carrying out the electrolysis and floating away the bubbles formed during water electrolysis at the respective net structures by flowing water and thus removing them from the area where electrolysis takes place. In addition, The 3D-knitted electrodes are flexible and can be compressed in a certain way. This avoids gaps when electrocatalytic cells are assembled together. These characteristics result in a more advantageous electrolysis process.

Nets made out of metal wires are already known for a long time e.g. in the area of catalysis (e.g. Ostwald process). Precious metal wire nets are used as catalytic and non-catalytic nets in reactors in which the oxidation of ammonia is performed (DE4028916 C2, EP0364153 B1, DE4206199 C1). As mentioned in the prior art section nickel nets have been also known already for the purpose of water electrolysis. However, the nets of the prior art are deemed less efficient in their capability to split water into hydrogen and oxygen by the aid of an electrical current.

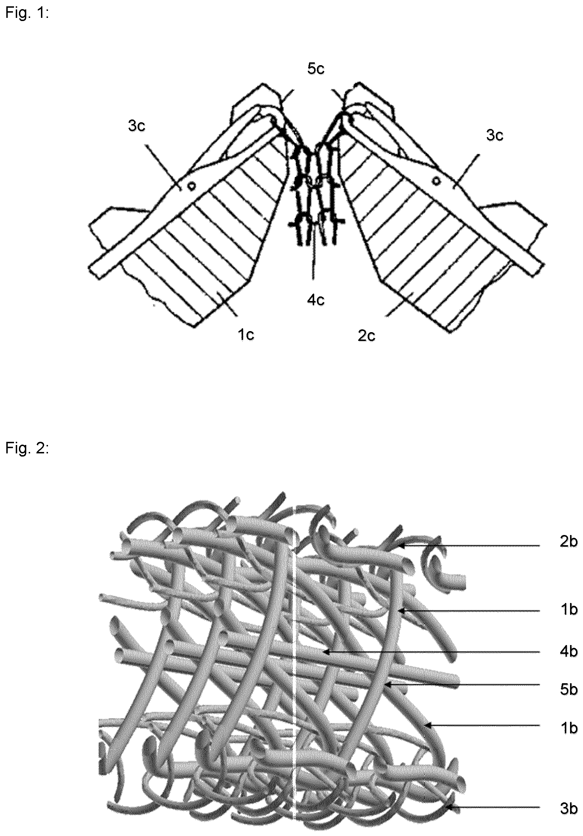

The nets of the present invention can be made in a couple of designs according to prior art processes. Flat-bed knitting machines are advantageously used for the knitting of these nets. The structure of the flat-bed knitting machine is illustrated FIG. 1. The inventive knitted nets can be produced on commercially available industrial flat-bed knitting machines (e.g. from Stoll, Reutlingen, type CSM 440 TC) by carrying e.g. a weft thread guide between the net thread guide and the pile thread guide. Preferably, according to EP504723A, the setting of the flat-bed knitting machines with respect to the pitch is between 3.63 and 1.58 mm, preferably 2.54 - 1.81 mm and with respect to the stitch length between 1 and 6 mm, more preferably 2 - 6 mm. The flat-bed knitting machine has a front (1c) and a rear needle bed (2c) in which the latch needles (3c) are installed. The latch needles pass through different positions depending upon the programming of the machine. The programming thus specifies the structure of the knitted fabric. A special feature of the flat-bed knitting machine as compared to other fabric-forming machines is that the knitted fabrics can be formed synchronously and independently of one another on the front as well as on the rear needle beds (single-bed article). Moreover, spacer fabrics (two-bed article) can be formed, in which the thread alternately in the front and rear forms stitches or double-knits (EP1358010B2). The knitted fabric is knitted downwardly between the two needle beds (4c). This is done by successively casting off the individual formed stitches over the casting-off position and casting-off web edge (5c). The nets of the present invention have a thickness of 0.5 mm - 5 mm, preferably 2 mm -4 mm.

Advantageously, in the nickel nets of the inventive electrode, weft threads are additionally inserted between the net layers. The weft threads can be inserted in several planes between the net layers. Preferably, the weft threads are arranged approximately centrally between two net layers. The weft threads are typically arranged unidirectionally in the planes. Preferably, the weft threads are arranged approximately parallel to each other and oriented in their direction perpendicular to the direction of the stitches in the net layers. Conveniently, the weft threads are inserted into the pile threads connecting the net layers and are fixed by these. The weft threads can also be multi-wire (see below).

In a preferred embodiment the nets can be made in a two-layer format as described above. These two layers are then advantageously connected with each other by the pile threads (WO02062466A2 or EP0680787A1). It is furthermore advantageous that the two net layers connected by pile threads comprise certain weft threads also comprising nickel which interlay between the two knitted layers and cross the course of the pile threads parallel to the net layers. With this a higher net density can be provided giving more surface area for the electrolysis. Fig. 2 shows, by way of example, an enlarged view of a section of a preferred inventive two-layer knitted nickel net. In the graphical representation, for visual clarification of the structure of the net geometry, the pile and weft threads are shown with a larger wire thickness than the net threads. The illustration shows a nickel net made of two net layers (2b) and (3b) connected to each other by pile threads (1b), into which weft threads (4b) are inserted approximately centrally between the net layers (2b) and (3b) and arranged approximately parallel to each other. The weft threads (4b) are fixed at the intersection points (5b) of the pile threads (1b) and form a further active plane approximately centrally between the net layers (2b) and (3b).

In an alternative embodiment the net comprising predominantly nickel is formed as a single layer net (US2023415139AA). To produce these metal nets on flat-bed knitting machines, the metal net wire comprising predominantly nickel and a yarn that is combustible or soluble in a solvent are knitted in a two-bed format like mentioned above. Two nets are knitted simultaneously on the front and rear needle beds and are joined by connecting pile threads comprising predominantly nickel, wherein, on the front or on the rear needle bed, a combustible or soluble yarn is used which is burnt-off or dissolved after the knitting process. Metal weft threads can also be integrated as mentioned above. The metal net, the pile threads and if present the weft threads remain after the yarn has been burnt-off or dissolved (Fig. 3). Here, the metal net layer comprising predominantly nickel comprises a higher volume density at the knitted side than at the side of the pile/weft threads. Hence, it is advantageously used in an electrode for the electrolysis of water because the water can flow more freely between and around the pile/weft threads and can take away the produced gas bubbles more efficiently. These types of nets are more preferably used. In addition, the pile threads opposite the net plane can promote the dgreeconductivity of the electrode since the contact between this side and current collector is optimized (see below).

In particular, by inserting the weft threads, an additional dense wire plane is inserted into the three-dimensional spatial structure of the knitted fabric at the crossing pile threads, which increases the volume density of metal wires in the electrode. The weft threads are fixed by the crossing pile threads, so that a further fixation of these wires by linking them through the formation of stitches can be omitted. They establish a higher surface area where the electrolysis can happen. It can be shown that the inventive electrode comprising the knitted nets have a significantly higher efficiency in alkaline water electrolysis than conventional three-dimensional, two- or multi-layered knitted catalyst nets, in which no weft threads are inserted.

The present invention therefore most preferably relates to a one layer or two layer knitted nickel net comprising pile threads and optionally weft threads. The nets are knitted from nickel wires on flat-bed machines, with optionally the weft threads inserted between the knitted net layers, and using yarn for one net layer if a single layer nickel net is to be produced. Thus, in a preferred embodiment, the present invention provides an inventive nickel net comprising: a. net layer(s) comprising nickel; b. pile threads comprising nickel, wherein the pile threads protrude from the plane of the net layer(s); and optionally c. weft threads comprising nickel, wherein the weft threads are located approximately centrally between the two knitted net layers connected by the pile threads. If one of the net layers is a yarn and bunt-off or dissolved afterwards, only the pile threads and optionally the weft threads remain at their respective positions to produce the single net layer.

In a preferred embodiment the pile threads used are established the same as mentioned in EP0680787A1. Preferably, the net layers of the electrode according to the invention are connected with 12 - 22 pile threads per cm², more preferably 16 - 20 pile threads per cm² and most preferably 16 - 18 pile threads per cm². The weft threads can be established in accordance with WO2002062466A2. In general, the pile threads as well as the weft threads can be made out of a metal wire comprising predominantly nickel. The nickel wires for the pile, weft and net wires can be as thick in diameter as necessary from the viewpoint of the skilled person. Preferably, they are between 30 - 200 µm, more preferably between 46 - 105 µm and most preferably between 76 - 105 µm.

The net itself and the pile and weft threads can be made out of one wire each. In contrast it is possible if a metal wire is composed of at least 2 individual wires or filaments. These two or more wires are than twisted around each other and are knitted or weaved as normal. The wire for weaving or knitting the catalyst net, therefore, is a stranded wire comprising an assembly of at least two intertwined filaments, preferably less than eight, preferably less than six and most preferably less than five wherein each of said filaments comprises predominantly nickel, said filaments being twisted together over their length so that each of the filaments is wound to at least one other filament (EP3523024A1). The thickness of the filaments can be chosen by those skilled in the art and according to EP3523024A1.

The metal wires for knitting and weaving the net can be chosen according to those skilled in the art as long as the wires comprise more than 50 wt-% (predominantly) nickel. Hence, both the pile threads and the weft threads preferably also predominantly comprise nickel. More preferably, all wire threads have the same composition. In fact, it is more preferable if the metal wires comprise more than 60 wt%, or more than 70 wt-%, or more than 80 wt-% nickel. Most preferred is an embodiment in which the metal wires are composed out of more than 90 wt-% nickel. The residual amount of metals in the wires can be selected from the group consisting of iron and cobalt.

As already mentioned electrodes are preferred in which the net has a volume density which is anisotropic over its thickness. This means that in view of the thickness direction the net shows differing volume densities. This means that at one end in the thickness direction the volume density of the net is lower than average and increases to the other end of the net. The volume density is the weight of the metal that is present in a specific volume segment and is measured in g/mm³. In a preferred embodiment the volume density has a gradient of 40 - 95%, more preferably 50 - 90% and most preferably 60 - 80% over the thickness direction of the net measured at the first end and at the second end of the net. If a single net layer is present this anisotropy is provided by the net layer and the pile/weft threads. If a two-layer nickel net is knitted this anisotropy can be provided by using different e.g. numbers of meshes per cm, wire diameter, number of wires, meshes form and size for the nets involved.

In a further preferred embodiment the electrode has a current collector and the knitted net is in contact with it over its entire length. Normally, these kind of electrodes are established in a sense that the net itself reflects the place where the electrolysis takes place. The net electrodes are in contact with a current collector which establishes the contact to the power source. In the present invention it is most preferred if the current collector has a dimensions that allows the contact with the net over the whole length of the net. This serves for a much better conductivity over the length of the net (Fig. 4).

In another aspect the present invention is directed to an electrolytic cell (Fig. 4) for the electrolysis of alkaline water solutions which comprises:
- a cathode half cell (1) comprising a current collector (6) and a knitted metal net (5) in contact with each other, the cathode half cell (1) allowing the alkaline water solution to pass therethrough and contact the knitted metal net (5); and
- an anode half cell (2) comprising an electrode which has a current collector and the knitted net is in contact with it over its entire length comprising a current collector (10) and a knitted metal net (11), the anode half cell (2) allowing the alkaline water solution to pass therethrough and contact the knitted metal net (11); and
- wherein the anode cell (2) and the cathode cell (1) are separated by a membrane (4).The preferred embodiments mentioned for the electrode apply also for the electrolytic cell mutatis mutandis.

The electrolytic cell of the present invention is displayed schematically and exemplarily in Fig. 4. The cell comprises two half cells (1) and (2) which can be reciprocally fastened by tightening means, for instance a set of bolts (3), and arranged to enclose a separator membrane (4), for instance consisting of a diaphragm or ion-exchange membrane. Cathode half cell (1) contains a 3D-knitted net (5) consisting of metallic wires and is coupled to a current collector (6) suitable for being connected to one pole of an external power source (7). The half cell (1) is also provided with inlet (8) and outlet (9), respectively for feeding the solution to be electrolyzed and for extracting the exhaust electrolytic solution mixed with the optional gases formed on net (5) during operation. In one embodiment, net (5) supports the membrane (4) which comes in contact therewith upon fastening bolts (3) and optionally under the effect of a pressure differential established between the two compartments established by the gases formed in both half cells which lead to different partial pressures in these half cells.

Anode half cell (2) comprises an electronic package which, in one embodiment, is comprised of a rigid current collector (10) and an 3D-knitted electrode of the present invention (11). Upon tightening bolts (3), the action exerted by the 3D-knitted nets on the two opposed surfaces of the rigid current collector (10) and of the flexible net (11) presses the latter against separator membrane (4), supported by net (5) plus current collector (6). The half cell (2) is further provided with outlet (13) and inlet (14), respectively, for feeding the solution to be electrolyzed and for extracting the exhaust electrolytic solution mixed with the optional gases formed on net (11).

The 3D-knitted net (11) is formed according to the invention. Net (5) could also be formed by a complex metallic wire structure alike net (11). Both nets provide a high superficial area that presents a sufficient elastic structure to ensure the electrical continuity and a uniform distribution of electric current along the whole surface of current collectors and the nets. So the presence of a flexible conductor is not necessary, since the 3D-knitted nets can perform both functions. Furthermore, the characteristics of the electrodes comprising the complex 3D-knitted nets could improve the release of the bubbles formed in the electrode surface, as well as their mass transfer capacity.

The anode half cell (2) and the cathode half cell (1) are connected to a power supply (7, 12) via the current collectors (6, 10). The current collectors can be selected according to those skilled in the art. However, they should establish a unique contact to the nets of the respective cells so that upon use the electric field is uniquely established along the length of the nets in the cathode as well as anode cell. The current collectors can be made out of iron-based (stainless steel), nickel, aluminum, titanium and copper, for example, with stainless steel being preferred (https://www.sciencedirect.com/science/article/abs/pii/S0013468622016760).

Between the anode half cell (2) and the cathode half cell (1) a membrane is present which can be selected by the skilled worker (https://pubs.acs.org/doi/epdf/10.1021/acs.chemrev.3c00694). Preferably, it is selected from the group consisting of a polymeric diaphragm or ion-exchange membrane is placed. In a preferred embodiment the net of the cathode half cell and the net of the anode half cell are separated by the membrane. This means that all three components are in close connection to each other when the bolts have been tightened.

The cathode net (5) can be formed in the same manner as the anode net (11). However, it is preferred, if the cathode net (5) has less of an average volume density compared to the anode net (11) to not limit the hydrogen production. In practice, the net of the cathode cell has an average areal weight of 400 - 3000 g/m². Preferably, it has a volume density of 500 - 2600 g/m², more preferably of 600 - 2400 g/m² in the average. As already mentioned, the volume density is the weight of the metal wires per space element. The cathode net can have the same anisotropy in volume density like the anode net.

The anode net (11) is structured as explained before and part of the inventive electrode. Also this net provides for a certain areal weight of 400 - 3000 g/m². Preferably, it has a volume density of 500 - 2900 g/m², more preferably of 1000 - 2800 g/m² in the average. As already mentioned, the volume density is the weight of the metal wires per space element.

In a preferred embodiment and as explained above the anode net (11) but preferably also the cathode net (5) do have an anisotropic volume density in g/mm³ along the thickness direction. This anisotropy leads to an increase in volume density over the thickness direction of the nets from one end to the other end. The increase needs not to be continually or uniform. Preferably, the anode net (11) is located the way that the highest volume density is present at the membrane side. In a very preferred embodiment, the highest volume density of both nets is rather present at the membrane side.

In a further aspect the present invention is directed to an electrolysis stack comprising at least two electrolytic cells arranged in a row. The individual stacks comprising the electrolytic cells are arranged according to the knowledge in the art (https://www.sciencedirect.com/science/article/pii/S0360319923022590?ref=pdf download&fr=RR-2&rr=8abd51ad382d049b). In principle, the number of stacks comprising the electrolytic cell can be according to those skilled in the art.

In a last aspect the present invention is directed to the use of an electrode according to the invention in an electrolysis cell for hydrogen production by means of electrolysis of an alkaline water solution. The skilled worker knows how to handle the electrode in the cell and the stacks to make the water electrolysis happen. Water flows through the individual half cell. By applying a sufficient voltage to the current collectors, electrolysis starts. The flow of water takes the appearing bubbles at the net electrodes with it and flows to the cell exit. In a preferred embodiment the electrode of the invention is used as an anode. However, an electrode of the invention can also be used on the cathode side as well.

By proposing an electrode for electrolysis, in particular for the electrolysis of alkaline water solutions, which comprise a knitted metal wire net, wherein the metal predominantly comprises nickel and the net is formed in one layer or two layers, and wherein the net layer(s) comprise pile threads protruding from the net plane(s), which can connect the layers to each other, the object of the invention is surprisingly achieved. The nickel nets of the present invention can be used as electrodes for electrolysis. These nickel nets prove to be more effective than the conventional structures of the prior art due to their more complex spatial structure. In particular, they offer superior superficial area, bubble releasing ability and flexibility The special structure also provide benefits regarding the conductivity, enhancing the contact between the current collector and the net. In addition, a stabilization of the individual net layer(s) of the electrode according to the invention is thus achieved in particular by implementing at least one pile thread and optionally weft threads. The person skilled in the art knows how many pile/weft threads he should use according to the above mentioned limits. The aim is to combine sufficient strength of the electrode with the lowest possible use of material and sufficient surface for electrolysis.

### Figures:

Fig. 1: Flat bed knitting machine with numerals being:
   - 1c:: front bed of knitting machine
   - 2c:: rear bed of knitting machine
   - 3c:: needles for knitting
   - 4c:: knitted nets
   - 5c:: web-edge for cutting off nets
Fig. 2: 3D-net with pile and weft threads with numerals being:
   - 1b:: pile thread
   - 2b:: net layer
   - 3b:: net layer
   - 4b:: weft thread
   - 5b:: intersection point
Fig. 3: Shows a three-dimensional one layer net with numerals being:
   - 1b:: pile thread
   - 2b:: net layer
   - 6b:: angle between net plane and pile thread
Fig. 4: Shows an electrolytic cell with numerals being:
   - 1:: Cathode cell
   - 2:: Anode cell
   - 3:: Bolts
   - 4:: Membrane
   - 5:: Knitted 3D-net on cathode side
   - 6:: Current collector
   - 7:: Current line cathode
   - 8:: Water feed cathode
   - 9:: Water outlet cathode
   - 10:: Current collector anode
   - 11:: Knitted 3D-net on anode side
   - 12:: Current line anode
   - 13:: Water outlet anode
   - 14:: Water feed anode

## Claims

1. Electrode for alkaline water electrolysis comprising a knitted metal wire net, wherein the metal wire to more than 50 wt-% comprises nickel and the net is a three-dimensional net, and the net has pile threads protruding from the net plane.

2. Electrode according to claim 1, **characterized in that** the net is formed in two layers and the two net layers are connected to each other by the pile threads.

3. Electrode according to claim 1, **characterized in that** the net is formed as a single layer net.

4. Electrode according to one of claims 1 to 3, **characterized in that** the metal wire of the knitted net has a thickness of 30 - 200 µm.

5. Electrode according to claim 3, **characterized in that** the metal wires of the net are composed of at least 2 individual wires.

6. Electrode according to one of the preceding claims, **characterized in that** the metal wires of the net contain more than 60% nickel by weight.

7. Electrode according to one of the preceding claims, **characterized in that** the volume density of the net is anisotropic over its thickness.

8. Electrode according to one of the preceding claims, **characterized in that** the electrode has a current collector and the knitted net is in contact with it over its entire length.

9. Electrolytic cell for the electrolysis of alkaline water solutions which comprises:
- a cathode half cell (1) comprising a current collector (6) and a knitted metal net (5) in contact with each other, the cathode half cell (1) allowing the alkaline water solution to pass therethrough and contact the knitted metal net (5); and
- an anode half cell (2) comprising an electrode according to claim 8 comprising a current collector (10) and a knitted metal net (11), the anode half cell (2) allowing the alkaline water solution to pass therethrough and contact the knitted metal net (11); and
- wherein the anode cell (2) and the cathode cell (1) are separated by a membrane (4).

10. Electrolytic cell according to claim 9, **characterized in that** the anode half cell (2) and the cathode half cell (1) can be connected to a power supply via the current collectors (6, 10).

11. Electrolytic cell according to one of claims 9 to 10, **characterized in that** between the cathode half cell (1) and the anode half cell (2) a membrane (4) selected from the group consisting of a polymeric diaphragm or ion-exchange membrane is placed.

12. Electrolytic cell according to any one of claim 11, **characterized in that** the net (5) of the cathode half cell (1) and the net (11) of the anode half cell (2) are separated by the membrane (4).

13. Electrolytic cell according to one of claims 9 to 12, **characterized in that** the net (5) of the cathode half cell (1) has an average areal weight of 400 - 3000 g/m2.

14. Electrolytic cell according to one of claims 9 to 13, **characterized in that** the net (11) of the anode half cell (2) has an average volume density of areal weight of 400 - 3000 g/m2.

15. Electrolysis stack comprising at least two electrolytic cells according to one of claims 9 to 14 arranged in a row.

16. Use of an electrode according to one of claims 1 - 8 in an electrolysis cell for hydrogen production by means of electrolysis of an alkaline water solution.

17. Use according to claim 16, **characterized in that** the electrode is used as an anode.

## Patentansprüche

1. Elektrode für die alkalische Wasserelektrolyse, umfassend ein gestricktes Metalldrahtnetz, wobei der Metalldraht zu mehr als 50 Gew.-% Nickel enthält und das Netz ein dreidimensionales Netz ist und das Netz Polfäden aufweist, die aus der Netzebene herausragen.

2. Elektrode nach Anspruch 1, **dadurch gekennzeichnet, dass** das Netz in zwei Schichten ausgebildet ist und die beiden Netzschichten durch die Polfäden miteinander verbunden sind.

3. Elektrode nach Anspruch 1, **dadurch gekennzeichnet, dass** das Netz als einlagiges Netz ausgebildet ist.

4. Elektrode nach einem der Ansprüche 1 bis 3, **dadurch gekennzeichnet, dass** der Metalldraht des gestrickten Netzes eine Dicke von 30 - 200 µm aufweist.

5. Elektrode nach Anspruch 3, **dadurch gekennzeichnet, dass** die Metalldrähte des Netzes aus mindestens zwei Einzeldrähten zusammengesetzt sind.

6. Elektrode nach einem der vorstehenden Ansprüche, **dadurch gekennzeichnet, dass** die Metalldrähte des Netzes mehr als 60 Gew.-% Nickel enthalten.

7. Elektrode nach einem der vorstehenden Ansprüche, **dadurch gekennzeichnet, dass** die Volumendichte des Netzes über seine Dicke anisotrop ist.

8. Elektrode nach einem der vorstehenden Ansprüche, **dadurch gekennzeichnet, dass** die Elektrode einen Stromsammler aufweist und dass das gestrickte Netz über seine gesamte Länge mit diesem in Kontakt steht.

9. Elektrolysezelle zur Elektrolyse alkalischer Wasserlösungen, umfassend:
- eine Kathodenhalbzelle (1) mit einem Stromsammler (6) und einem gestrickten Metalldrahtnetz (5), die miteinander in Kontakt stehen, wobei die Kathodenhalbzelle (1) die Passage der alkalischen Wasserlösung und deren Kontakt mit dem gestrickten Metalldrahtnetz (5) ermöglicht; und
- eine Anodenhalbzelle (2) umfassend eine Elektrode nach Anspruch 8 mit einem Stromsammler (10) und einem gestrickten Metalldrahtnetz (11), wobei die Anodenhalbzelle (2) die Passage der alkalischen Wasserlösung und deren Kontakt mit dem gestrickten Metalldrahtnetz (11) ermöglicht; und
- wobei die Anodenzelle (2) und die Kathodenzelle (1) durch eine Membran (4) voneinander getrennt sind.

10. Elektrolysezelle nach Anspruch 9, **dadurch gekennzeichnet, dass** die Anodenhalbzelle (2) und die Kathodenhalbzelle (1) über die Stromsammler (6, 10) mit einer Stromversorgung verbindbar sind.

11. Elektrolysezelle nach einem der Ansprüche 9 bis 10, **dadurch gekennzeichnet, dass** zwischen der Kathodenhalbzelle (1) und der Anodenhalbzelle (2) eine Membran (4), ausgewählt aus der Gruppe bestehend aus einer polymeren Diaphragma- oder lonenaustauschmembran, angeordnet ist.

12. Elektrolysezelle nach einem der Ansprüche 9 bis 11, **dadurch gekennzeichnet, dass** das Netz (5) der Kathodenhalbzelle (1) und das Netz (11) der Anodenhalbzelle (2) durch die Membran (4) voneinander getrennt sind.

13. Elektrolysezelle nach einem der Ansprüche 9 bis 12, **dadurch gekennzeichnet, dass** das Netz (5) der Kathodenhalbzelle (1) ein durchschnittliches Flächengewicht von 400 - 3000 g/m² aufweist.

14. Elektrolysezelle nach einem der Ansprüche 9 bis 13, **dadurch gekennzeichnet, dass** das Netz (11) der Anodenhalbzelle (2) eine durchschnittliche Volumendichte bzw. ein Flächengewicht von 400 - 3000 g/m² aufweist.

15. Elektrolysestapel, umfassend mindestens zwei Elektrolysezellen nach einem der Ansprüche 9 bis 14, die in einer Reihe angeordnet sind.

16. Verwendung einer Elektrode nach einem der Ansprüche 1 - 8 in einer Elektrolysezelle zur Wasserstofferzeugung mittels Elektrolyse einer alkalischen Wasserlösung.

17. Verwendung nach Anspruch 16, **dadurch gekennzeichnet, dass** die Elektrode als Anode eingesetzt wird.

## Revendications

1. Électrode pour l'électrolyse alcaline de l'eau comprenant un tricot métallique en fil métallique, dans lequel le fil métallique comprend plus de 50 % en poids de nickel, le tricot étant tridimensionnel et muni de fils boucles dépassant du plan du tricot.

2. Électrode selon la revendication 1, **caractérisée en ce que** le tricot est formé de deux couches et que les deux couches sont reliées l'une à l'autre par les fils boucles.

3. Électrode selon la revendication 1, **caractérisée en ce que** le tricot est formé en une seule couche.

4. Électrode selon l'une quelconque des revendications 1 à 3, **caractérisée en ce que** le fil métallique du tricot présente une épaisseur de 30 à 200 µm.

5. Électrode selon la revendication 3, **caractérisée en ce que** les fils métalliques du tricot sont constitués d'au moins 2 fils individuels.

6. Électrode selon l'une quelconque des revendications précédentes, **caractérisée en ce que** les fils métalliques du tricot contiennent plus de 60 % en poids de nickel.

7. Électrode selon l'une quelconque des revendications précédentes, **caractérisée en ce que** la densité volumique du tricot est anisotrope sur son épaisseur.

8. Électrode selon l'une quelconque des revendications précédentes, **caractérisée en ce que** l'électrode comprend un collecteur de courant et que le tricot métallique est en contact avec celui-ci sur toute sa longueur.

9. Cellule électrolytique pour l'électrolyse de solutions aqueuses alcalines comprenant :
- une demi-cellule cathodique (1) comprenant un collecteur de courant (6) et un tricot métallique (5) en contact l'un avec l'autre, la demi-cellule cathodique (1) permettant à la solution aqueuse alcaline de la traverser et de contacter le tricot métallique (5) ; et
- une demi-cellule anodique (2) comprenant une électrode selon la revendication 8 comprenant un collecteur de courant (10) et un tricot métallique (11), la demi-cellule anodique (2) permettant à la solution aqueuse alcaline de la traverser et de contacter le tricot métallique (11) ; et
- la demi-cellule anodique (2) et la demi-cellule cathodique (1) étant séparées par une membrane (4).

10. Cellule électrolytique selon la revendication 9, **caractérisée en ce que** la demi-cellule anodique (2) et la demi-cellule cathodique (1) peuvent être raccordées à une alimentation électrique via les collecteurs de courant (6, 10).

11. Cellule électrolytique selon l'une quelconque des revendications 9 à 10, **caractérisée en ce qu'**une membrane (4), choisie dans le groupe constitué par un diaphragme polymère ou une membrane échangeuse d'ions, est disposée entre la demi-cellule cathodique (1) et la demi-cellule anodique (2).

12. Cellule électrolytique selon la revendication 11, **caractérisée en ce que** le tricot (5) de la demi-cellule cathodique (1) et le tricot (11) de la demi-cellule anodique (2) sont séparés par la membrane (4).

13. Cellule électrolytique selon l'une quelconque des revendications 9 à 12, **caractérisée en ce que** le tricot (5) de la demi-cellule cathodique (1) présente un poids surfacique moyen de 400 à 3000 g/m2.

14. Cellule électrolytique selon l'une quelconque des revendications 9 à 13, **caractérisée en ce que** le tricot (11) de la demi-cellule anodique (2) présente une densité volumique moyenne correspondant à un poids surfacique de 400 à 3000 g/m2.

15. Empilement d'électrolyse comprenant au moins deux cellules électrolytiques selon l'une quelconque des revendications 9 à 14 disposées en série.

16. Utilisation d'une électrode selon l'une quelconque des revendications 1 à 8 dans une cellule d'électrolyse pour la production d'hydrogène par électrolyse d'une solution aqueuse alcaline.

17. Utilisation selon la revendication 16, **caractérisée en ce que** l'électrode est utilisée comme anode.
